# EUROPEAN PATENT SPECIFICATION

(11) **EP 0 618 743 B1**
(45) Date of publication and mention of the grant of the patent: **03.02.1999**
(21) Application number: 94108094.7
(22) Date of filing: 08.11.1988
(51) Int. Cl.: H04Q 7/06, G08B 3/10, H04L 1/00, H04L 12/54

(54) **Time division multiplexed communication method and system for increasing the number of individual receivers than can be served**
Zeitmultiplexkommunikationsverfahren und -system zur Erweiterung der Anzahl von bedienbaren Einzelempfängern
Procédé et système multiplex à division temporelle pour incrémenter le nombre de récepteurs individuels qui peuvent être desservis

(30) Priority: 16.11.1987 US 121139
(43) Date of publication of application: 05.10.1994
(62) Divisional of application: 88310508.2
(73) Proprietor: SEIKO CORPORATION, Tokyo 104 (JP); SEIKO EPSON CORPORATION, Suwa-shi, Nagano-ken 392 (JP)
(72) Inventor: Gaskill, Garold B., Tualatin, Oregon 97062 (US); Park, Daniel J., Beaverton, Oregon 97006 (US); Dey, Norbert E., Newberg, Oregon 97132 (US); Peek, William H., Beaverton, Oregon 97007 (US); Ragan, Lawrence H., Richardson, Texas 75080 (US)
(74) Representative: Meddle, Alan Leonard

(56) References cited:
- WO-A-86/03645
- GB-A- 2 147 176
- US-A- 4 383 257

## Description

THIS INVENTION relates to communication systems and receivers and more particularly to a method and system for data transmission to many receivers on a common channel.

International Publication No. WO86/03645 discloses a watch pager and communication protocol in a transmitter system comprising a plurality of stations transmitting, on different frequencies, digital data packets to a plurality of receivers each having an address-system control infonnation encoded into control packets which are transmitted to the receivers to direct a receiver to a system and a channel for receiving following data packets. To this aim, the receiver must scan the frequency spectrum for control packets and check their contents, in order to verify if the system to which it is currently tuned is its assigned system; these operations are repeated until the verification yields a positive result.

With respect to this known system, the present invention aims at simplifying the tuning of a receiver to its assigned transmitting station, and at increasing the number of individual receivers that can be served by a single transmitter system. In this respect:

One object of the invention is to service a large number of users.

A further object of the invention is to enable paging via a common system of a virtually unlimited number of pager subscribers within any desired area, including local, regional, national, continental, and worldwide communication capability.

Still another object of the invention is to enable subscribers in such paging system reliably and efficiently to receive messages of unlimited length and information content.

Accordingly, one aspect of the present invention provides a time division multiplexed communication method for increasing the number of individual receivers that can be served by a single transmitter system comprising a plurality of stations transmitting on different frequencies digital data packets to a plurality of receivers each having an address, the method being characterised by:
encoding format information in a data packet uniquely addressed to a receiver within the system indicating that the data therein is receiver control information rather than message information;
encoding in the receiver control information the identification of stations within the system to which the addressed receiver must tune for message information;
transmitting the data packet from all stations within the system to alert the addressed receiver to tune to any of the identified stations; and
transmitting the data packets having message information to the addressed receiver only from the identified stations.

Preferably, the encoding of the identification of stations comprises identifying each station by a time offset that corresponds to the station's frequency in a list of frequencies and offsets known to the receiver.

Another aspect of the present invention provides a time division multiplexed communication system for increasing the number of individual receivers that can be served by a single transmitter system comprising a plurality of stations transmitting on different frequencies digital data packets to a plurality of receivers each having an address, the communication system being characterised by:
means for encoding format information in a data packet uniquely addressed to a receiver within the transmitter system indicating that th4e dsta therein is receiver control information rather than message information;
means for encoding in the receiver control information the identification of stations within the transmitter system to which the addressed receiver must tune for message information;
means for transmitting the data packet from all stations within the system to alert the addressed receiver to tune to any of the identified stations; and
means for transmitting from the identified stations to the addressed receiver the data packets having message information.

Consequently, the means for encoding the identification of stations comprises means for identifying each station by a time offset that corresponds to the station's frequency in a list of frequencies and offsets known to the receiver.

The foregoing and additional objects, features and advantages of the present invention will be more readily apparent from the following detailed description of preferred embodiments thereof which proceeds with reference to the accompanying drawings.

Figures 1A, 1B and 1C show the preferred forth of digital data protocol employed in a paging or other data delivery system according to the invention.

Figure 2 is a diagram of a control packet that includes a mask field and an address field for system splitting and identifies the tuned station by its frequency and time offset.

Figure 3 is a diagram of a sub-frame illustrating the time offsetting of transmitting stations within a system.

Figure 4 is a diagram of a control packet that lists the time offset and frequencies for stations to which the receiver can tune to receive a message.

Figure 5 is a diagram of a data packet that includes zonal coverage information.

### Message Format

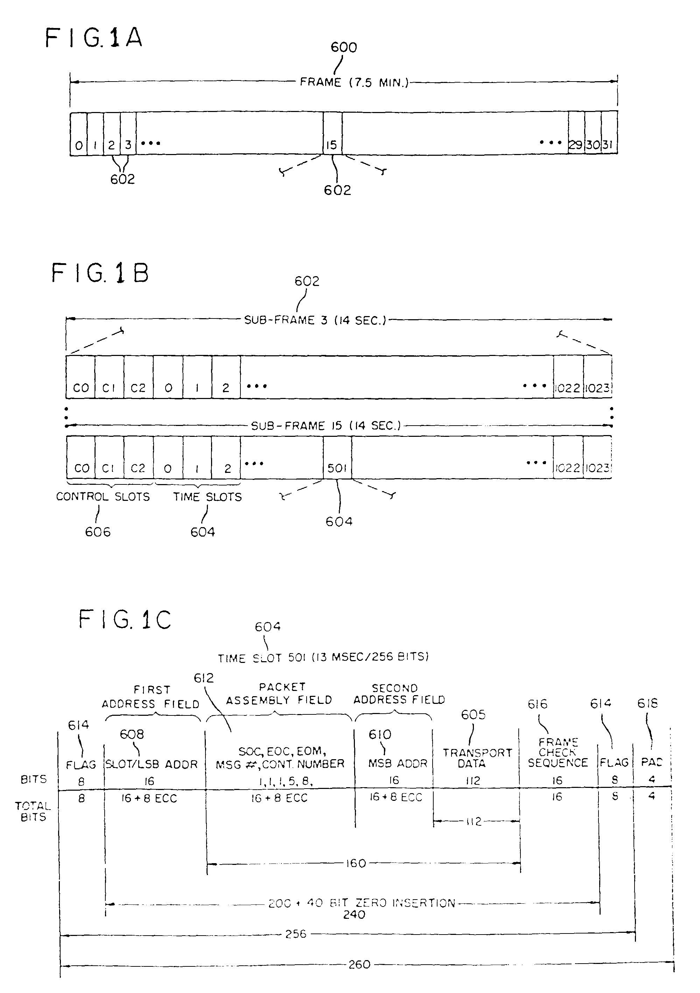

The format for transmitting messages is shown in Figures 1A through 1C. The format comprises a time frame 600 (Figure 1A) of a predetermined length such as seven and one-half minutes, which is repeated cyclically. Within each frame 600 are a predetermined number of subframes 602. Thirty-two subframes of about fourteen seconds each are shown in Fig. 1A. Each subframe is uniquely numbered 0, 1, 2...31. Moving to Fig. 1B, each subframe in turn comprises a predetermined number of time slots 604 during which a packet is transmitted. In Fig. 1B, 1,024 time slots of about thirteen milliseconds each are shown. Each time slot is uniquely numbered 0, 1, 2, ...1023. In the illustrated example, the numbering of the time slots and subframes is sequentially increasing but this particular numbering scheme can be different so long as it repeats predictably in each frame. Subframe and time slot number information are sent in the transmitted data, and used by the receivers, as described hereinafter to determine a reference point within a frame.

Each packet transmitted within a time slot contains 256 bits of information and 4 padding bits and carries 112 bits of message or transport data 605, as shown in Fig. 1C. Each subframe also has control slots 606 for transmitting packets of control information. Control slots 606 are like time slots 604 in both duration and format, but differ in information content as described hereinafter.

The size and duration of frames, subframes and time slots can be varied. The duration and number of time slots should, however, be of the order illustrated to enable a very short receiver duty cycle (e.g., as low as 0.006% in the illustrated example) and frequently-recurring opportunities to transit paging messages to a large number of users on a single channel (32,768 time slots per 7.5 minutes). The transmitted data rate must likewise be on the order of 19 kilobits to support the protocol and message format described herein. Also, using very short duration time slots is an important factor in improving reception reliability in very high frequency paging systems.

The message packet shown in Fig. 1C is generated starting with transport data 605. The following description of the message packet is arranged in the order in which it is built up. Each watch pager or receiver is assigned a unique serial number. Referring to Fig. 1C, the address field within a packet includes first and second fields, 608, 610. Ordinarily, for a single packet intended for an individual receiver, the address field matches the address of the receiver. For a specified group of receivers, e.g., firemen, only a specified portion of the packet address need match the addresses of the receivers assigned to the group. The second address field is discussed next.

Second address field 610 contains the most significant 16-bits (MSB) of the receiver's address, which correspond to the first part of the receiver's serial number. The first of these most significant bits indicates whether the message is for a group of receivers (1) or for an individual receiver (0). For Group receivers, the remaining 15-bits correspond to the Group number. For individual receivers, these bits constitute a part of the individual receiver's address (which is its serial number), of which the remainder is provided by address field 608. Individual receivers with different most significant bits can thus share the same time slot and subframe. A power-limited receiver will turn on briefly during its assigned time slot and subframe(s) to detect if its full address matches that address in the packet. If it does so, it will remain on to accept and process the data in the packet. If it does not, it turns off until the arrival of a control packet in the subframe immediately preceding its assigned subframe. Receivers, of course, could be designed to turn on more often, up to once every 14.0625 seconds. The control packet indicates, to the receiver, time, date and other system information including a list of possible frequencies to use before turning on again at its assigned subframe and time slot.

A non-power-limited receiver (not shown) can monitor all packets transmitted. Receivers of a specific assigned group (e.g., receivers monitoring stock market reports) will detect packets having a matching group address. These packets, which carry group messages, can arrive in any time slot not carrying messages for another receiver. Thus, a full power receiver is required in most cases to receive group messages on a regular basis.

First address field 608 contains the least significant 16-bits (LSB) of a receiver address corresponding to a first portion of a receiver's assigned serial number. For an individual receiver being sent a single packet, the least significant or lower 10-bits of packet address field 608 correspond to an assigned time slot number and to the least significant 10-bits of the receiver's address. The remaining or upper 6-bits of field 608 are ordinarily used to identify to the receiver one or more subframes, depending on how many of the bits are masked by the receiver. These 6-bits also match a corresponding portion of the individual receiver's address and, for a receiver that normally turns on once each frame, corresponds to subframe number. If one bit of the upper 6-bits is masked, the subframe number, as interpreted by the receiver, recurs every 32nd subframe. If two bits are masked, the subframe number recurs every 16th subframe, so the individual receiver turns on twice each frame. When a group message is transmitted, field 608 contains the subframe number and time slot number in which the message is transmitted.

### System Splitting for Increasing System Capacity

For densely populated areas in which a great number of watch pagers and attendant receivers are located, several systems may be required to accommodate the receivers so that messages can be sent quickly. To utilize the several systems, the receivers are split into segments, with each segment served by one system.

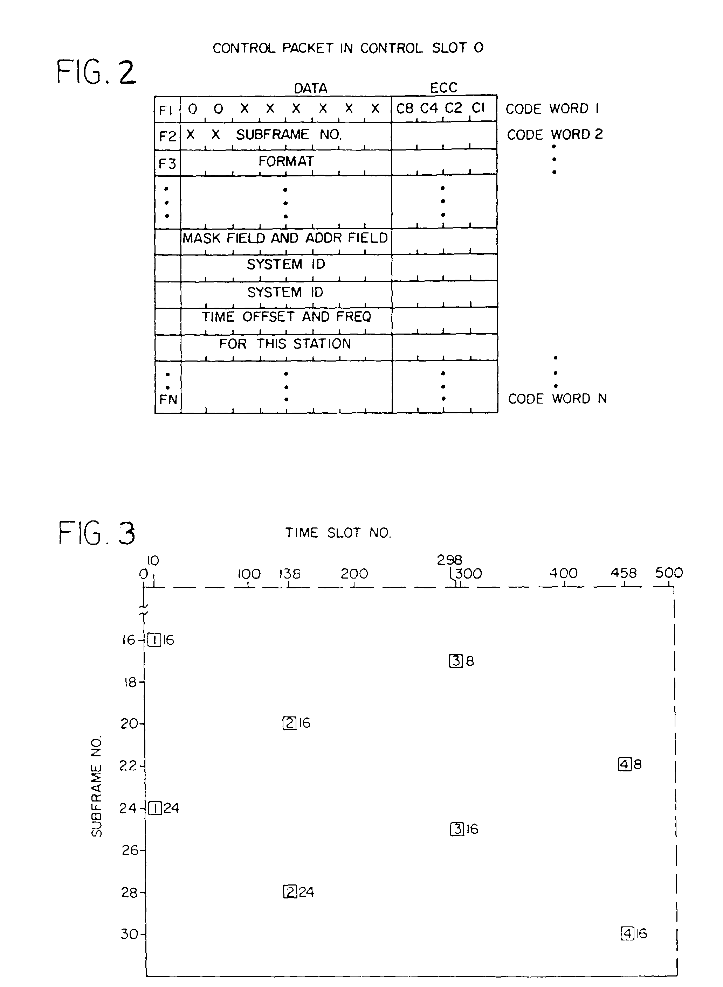

Fig. 2 illustrates a control packet that provides for system splitting. Control packets are read by all receivers within the system and appear in the time slots at the beginning of each subframe. In the seventh octet of this packet a 4-bit mask field appears with an adjacent 4-bit address field. Each of the two fields corresponds to a predetermined portion of the receiver address. In the present embodiment, the fields correspond to bits 19 through 16 in the most significant portion of the receiver address as discussed in the previous section entitled "Message Format".

The four bits of the mask field indicate which bits of the address field must be matched by bits 19 through 16 of the receiver address. A 0 bit indicates that the corresponding address bit of the receiver is not significant. A 1 bit, on the other hand, indicates that the corresponding address bit of the receiver is significant and must match the corresponding bit in the address field.

The four bits of the address field indicate the receivers that are served by the currently tuned system and thus must be matched against bits 19 through 16 that are significant. Address bits of the receiver that are not significant are not considered in determining addresses served. For example, assume that there are three systems in an area to serve receivers and that one system will serve half of the receivers and the other two systems will each serve a remaining quarter. The system serving half of the receivers transmits a 0010 as the mask field and a 0000 as the address field. Only the second bit in the mask field, corresponding to bit 17, is significant. Bit 17 in the receiver address then must be a 0 as shown in the address field to stay tuned to the current system. Half of the receivers within the area likely have a 0 and half likely have a 1. One of the other systems transmits a 0011 in the mask field and a 0011 as the address field. Bits 16 and 17 are now significant, and about one-quarter of the receivers in the area likely have this bit combination. The last system transmits a 0011 as a mask field and a 0010 as the address field. Bits 16 and 17 are again significant and cover the last quarter of the receivers in the area.

If a receiver determines from the control packet that it is tuned to the wrong system, it begins scanning until it locks onto another station and checks its address again against the address field. The scanning continues until the receiver finds the correct system.

### Time Offsetting of Station Transmissions

A receiver may miss its data packet transmitted from its currently tuned station, either because the receiver turned on too late to receive the packet or because of noise that interfered with packet reception. To improve the probability that the receiver will receive its data packet, a control packet transmitted by the currently tuned station may also include time offset information that indicates that the message is also being transmitted from other stations within the system at different times.

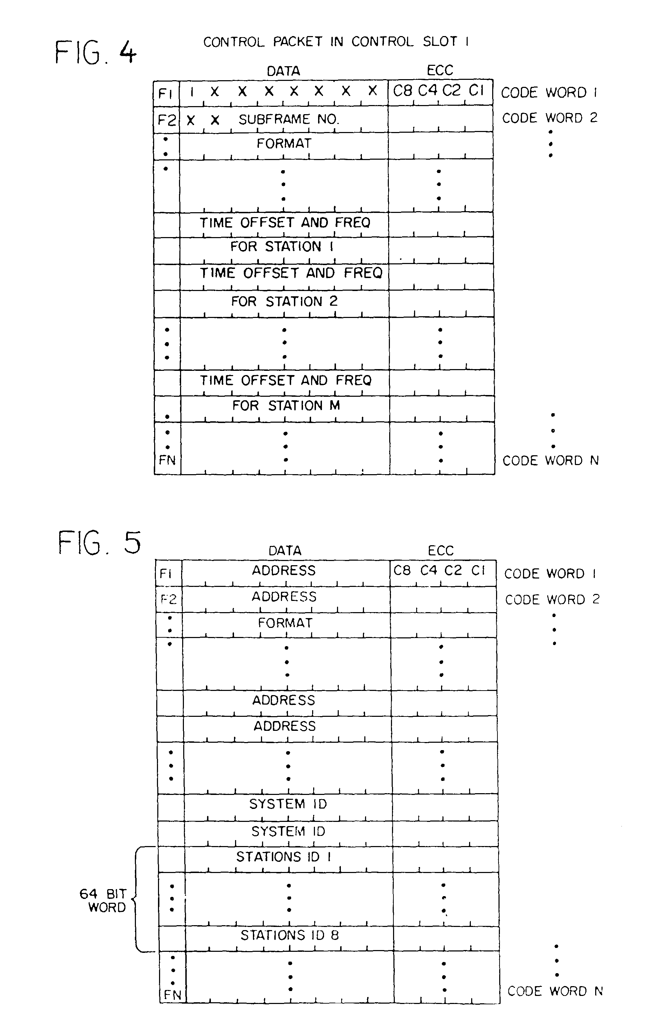

Fig. 3 is a diagram of a transmitted frame that illustrates the time offset, with subframes 0-31 indicated on the vertical axis and time slots 0-500 of the 1027 total slots indicated on the horizontal axis. The 32 subframes result from a masking of the most significant bit of the subframe identification number as discussed in the previous section entitled "Message Format". For example, four stations 1-4 with different frequencies within the transmitting system are assigned a time offset number. Station 1 is the zero offset station with a time offset number of 0 and is the reference station for the frame. Station 2 has a time offset number of 4; station 3 has a time offset number of 9; and station 4 has a time offset number of 14. Each unit of time offset is equal to a preselected number of time slots such as 1059 time slots with a duration of about 13.7 msec each. In the present example, station 2 therefore transmits its frame 58.0 seconds after station 1; station 3 transmits its frame 130.5 seconds after station 1; and station 4 transmits its frame 203.0 seconds after station 1.

Assume, for example, that the addressed receiver is to turn on in time slot 10 of subframe 0, 8, 16, and 24 of the tuned station, with a packet for that receiver being sent twice on each station. In Fig. 3, each small square represents a packet with a message for the addressed receiver; the number within the square represents the station number; and the number to the right of the square represents the subframe number of the station transmitting the packet. The message packet is thus sent in slot 10 of subframes 16 and 24 of stations 1 and 2, and in slot 10 of subframes 8 and 16 of stations 3 and 4.

Fig. 3 shows how often the message packet is sent relative to the reference frame of station 1. On station 1, of course, the message packet appears during slot 10 of subframes 16 and 24. Because of the time offset, however, the message packet on station 2 appears 1059 times the time offset number of 4 which is slot 138 of subframes 20 and 28 of station 1. Because of the different subframes for transmission on stations 3 and 4, the message packet from station 3 appears during slot 298 of subframes 17 and 25 of station 1, and from station 4 during slot 458 of subframes 22 and 30 of station 1. In total, then, the message appears eight times during the frame.

Referring now to Figs. 2 and 4, the receiver will have read both these control packets for control slots 0 and 1, respectively, which contain the frequency and time offset for the presently tuned station and a list of alternative stations to which the receiver can tune to receive its message. In Fig. 2, octets 10 and 11 of the control packet indicate the time offset of the currently tuned station relative to a predetermined zero offset station. The time offset is a 6-bit number that expresses the offset in units equal to a predetermined number of time slots, such as 1059, 1043, etc., designated in the system. The other ten bits indicate the current station's frequency. For FM radio stations, station numbers range from 1 to 641. Stations are positioned 50 kHz apart, starting with station 1 at 76.0 MHz and ending with station 641 at 108.0 MHz. The ten bits therefore uniquely specify an FM radio station in the 76.0 to 108.0 MHz range. The list provided in the following control packet of Fig. 4 comprises the station numbers ranging from 1 to 641 and the time offset for each.

If a receiver turns on in its assigned slot at its currently tuned station and finds no data, it utilizes the list of frequencies and offsets that it previously received in the control packets. From the list of offsets and the offset of the currently tuned station, the receiver determines the next station by its frequency that will transmit the missed message packet. If the last successful station was number 2 and the receiver turns on at subframe 24, for example, the receiver will find no data. It then proceeds to tune to the next station, station 4, at subframe 30, slot 458 relative to station 1 to receive the message packet as indicated in Fig. 3.

### Zonal Coverage For Increasing Individual System Capacity

The format octet that alerts receivers to multiple messages within a packet may also provide other information. One format value indicates to an addressed receiver which stations within the transmission system are transmitting data packets for that receiver. By limiting the number of stations within the system that transmit to a particular receiver, more receivers can be addressed more often. The limitation is to those receivers within a single station's zone of coverage. Like the system splitting discussed above zonal coverage increases the number of receivers that can be served in a given area.

Fig. 5 illustrates a data packet that all stations within a system transmit to a receiver when it first registers with the paging service. In addition to the receiver's address and the format octet just described, eight octets labeled in the figure as Station I.D. are transmitted that form a 64-bit word in which each bit position represents a time offset number. If the bit in the third bit position of the word equals a 1, for example, then the receiver consults its list of stations and offsets received from the control packets to determine the station that has an offset of 3. It can then tune to that station to receive message packets. If the bit in the fourth bit position equals a 0, then the station with an offset of four is not transmitting message packets for that receiver. The stations to which a receiver can tune are thus identified by their offsets, with offsets ranging from 0 to 63.

## Claims

1. A time division multiplexed communication method for increasing the number of individual receivers that can be served by a single transmitter system comprising a plurality of stations transmitting on different frequencies digital data packets to a plurality of receivers each having an address, the method being characterised by: encoding format information in a data packet uniquely addressed to a receiver within the system indicating that the data therein is receiver control information rather than message information; encoding in the receiver control information the identification of stations within the system to which the addressed receiver must tune for message information; transmitting the data packet from all stations within the system to alert the addressed receiver to tune to any of the identified stations; and transmitting the data packets having message information to the addressed receiver only from the identified stations.

2. The method of Claim 1 in which encoding the identification of stations comprises identifying each station by a time offset that corresponds to the station's frequency in a list of frequencies and offsets known to the receiver.

3. A time division multiplexed communication systems for increasing the number of individual receivers that can be served by a single transmitter system comprising a plurality of stations transmitting on different frequencies digital data packets to a plurality of receivers each having an address, the communication system being characterised by: means for encoding format information in a data packet uniquely addressed to a receiver within the transmitter system indicating that the data therein is receiver control information rather than message information; means for encoding in the receiver control information the identification of stations within the transmitter system to which the addressed receiver must tune for message information; means for transmitting the data packet from all stations within the system to alert the addressed receiver to tune to any of the identified stations; and means for transmitting from the identified stations to the addressed receiver the data packets having message information.

4. The communication system of Claim 3 in which the means for encoding the identification of stations comprises means for identifying each station by a time offset that corresponds to the station's frequency in a list of frequencies and offsets known to the receiver.

## Patentansprüche

1. Zeitmultiplex-Kommunikationsverfahren zur Erweiterung der Anzahl von individuellen Empfängern, die von einem einzigen Sendesystem bedient werden können, das mehrere Stationen umfaßt, die auf verschiedenen Frequenzen digitale Datenpakete zu mehreren Empfängern übertragen, die jeweils eine Adresse besitzen, wobei das Verfahren durch die folgenden Schritte gekennzeichnet ist:
Kodieren von Formatinformation in einem Datenpaket, das in eindeutiger Weise an einen Empfänger in dem System adressiert ist, welche angibt, daß die darin enthaltenen Daten eine Empfänger-Steuerinformation und nicht eine Nachrichteninformation sind,
Kodieren der Kennung der Stationen in dem System, auf die sich der adressierte Empfänger für eine Nachrichteninformation abstimmen muß, in der Empfänger-Steuerinformation,
Übertragen des Datenpakets von allen Stationen in dem System, um den adressierten Empfänger aufzufordern, sich auf eine der identifizierten Stationen abzustimmen, und
Übertragen der Datenpakete mit der Nachrichteninformation an den adressierten Empfänger nur von den identifizierten Stationen.

2. Verfahren nach Anspruch 1, bei dem das Kodieren der Kennung der Stationen das Identifizieren jeder Station durch einen Zeitversatz umfaßt, welcher der Frequenz der Station in einer Liste von Frequenzen und Zeitversätzen entspricht, welche dem Empfänger bekannt ist.

3. Zeitmultiplex-Kommunikationssystem zum Erweitern der Anzahl von individuellen Empfängern, welche durch ein einziges Sendesystem bedient werden können, welches mehrere Stationen umfaßt, die auf verschiedenen Frequenzen digitale Datenpakete an mehrere Empfänger übertragen, die jeweils eine Adresse besitzen, wobei das Kommunikationssystem gekennzeichnet ist durch:
eine Einrichtung zum Kodieren von Formatinformation in einem Datenpaket, das in eindeutiger Weise an einen Empfänger in dem Sendesystem adressiert ist, welche angibt,
daß die darin enthaltenen Daten eine Empfänger-Steuerinformation und nicht eine Nachrichteninformation sind,
eine Einrichtung zum Kodieren der Kennung der Stationen in dem Sendesystem, auf welche der adressierte Empfänger sich für eine Nachrichteninformation abstimmen muß, in der Empfänger-Steuerinformation,
eine Einrichtung zum Übertragen des Datenpakets von allen Stationen in dem System, um den adressierten Empfänger aufzufordern, sich auf eine der identifizierten Stationen abzustimmen, und
eine Einrichtung zum Übertragen der Datenpakete mit der Nachrichteninformation von den identifizierten Stationen zu dem adressierten Empfänger.

4. Kommunikationssystem nach Anspruch 3, bei dem die Einrichtung zum Kodieren der Kennung der Stationen eine Einrichtung zum Identifizieren jeder Station durch einen Zeitversatz aufweist, welcher der Frequenz der Station in einer Liste von Frequenzen und Zeitversätzen entspricht, die dem Empfänger bekannt ist.

## Revendications

1. Un procédé de communication à multiplexage à division du temps pour augmenter le nombre de récepteurs individuels qui peuvent être desservis par un seul système transmetteur comprenant une pluralité de stations transmettant sur des fréquences différentes des paquets de données numériques à une pluralité de récepteurs ayant chacun une adresse, le procédé étant caractérisé par : le codage d'informations de format dans un paquet de données uniquement adressé à un récepteur dans le système indiquant que les données contenues sont des informations de commande de récepteur plutôt que des informations de message; le codage dans les informations de commande de récepteur de l'identification de stations dans le système sur lesquelles le récepteur adressé doit s'accorder pour des informations de message; la transmission du paquet de données depuis toutes les stations dans le système pour signaler au récepteur adressé de s'accorder sur une quelconque des stations identifiées; et la transmission des paquets de données ayant des informations de message au récepteur adressé uniquement depuis les stations identifiées.

2. Le procédé de la Revendication 1 dans lequel le codage de l'identification des stations comprend l'identification de chaque station par un décalage temporel qui correspond à la fréquence de la station dans une liste de fréquences et de décalages connus du récepteur.

3. Un système de communication à multiplexage à division du temps pour augmenter le nombre de récepteurs individuels qui peuvent être desservis par un seul système transmetteur comprenant une pluralité de stations transmettant sur des fréquences différentes des paquets de données numériques à une pluralité de récepteurs ayant chacun une adresse, le système de communication étant caractérisé par : des moyens de codage d'informations de format dans un paquet de données uniquement adressé à un récepteur dans le système de transmission, indiquant que les données contenues sont des informations de commande de récepteur plutôt que des informations de message; des moyens pour coder dans les informations de commande du récepteur l'identification des stations dans le système de transmission sur lesquelles le récepteur adressé doit s'accorder pour des informations de message; des moyens pour transmettre le paquet de données depuis toutes les stations dans le système pour signaler au récepteur adressé de s'accorder sur l'une quelconque des stations identifiées; et des moyens pour transmettre depuis les stations identifiées au récepteur adressé les paquets de données ayant des informations de message.

4. Le système de communication de la Revendication 3 dans lequel les moyens pour coder l'identification des stations comprennent des moyens pour identifier chaque station par un décalage de temps qui correspond à la fréquence de la station dans une liste de fréquences et de décalages connus du récepteur.
